(19) Europäisches Patentamt / European Patent Office / Office européen des brevets

(11) **EP 4 243 117 A1**

(12) **EUROPEAN PATENT APPLICATION**
published in accordance with Art. 153(4) EPC

(43) Date of publication:
**13.09.2023 Bulletin 2023/37**

(21) Application number: **22736928.7**

(22) Date of filing: **11.01.2022**

(51) International Patent Classification (IPC):
$H01M\ 4/36^{(2006.01)}$    $H01M\ 4/525^{(2010.01)}$
$H01M\ 4/505^{(2010.01)}$    $H01M\ 4/62^{(2006.01)}$
$H01M\ 10/052^{(2010.01)}$    $C01G\ 53/00^{(2006.01)}$

(52) Cooperative Patent Classification (CPC):
C01G 53/00; H01M 4/36; H01M 4/505;
H01M 4/525; H01M 4/62; H01M 10/052;
Y02E 60/10

(86) International application number:
**PCT/KR2022/000462**

(87) International publication number:
**WO 2022/149951 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.01.2021 KR 20210003193**

(71) Applicant: **LG CHEM, LTD.**
**Yeongdeungpo-gu,**
**Seoul 07336 (KR)**

(72) Inventors:
• **EOM, Jun Ho**
**Daejeon 34122 (KR)**

• **AHN, Dong Joon**
**Daejeon 34122 (KR)**
• **LIM, Chae Jin**
**Daejeon 34122 (KR)**
• **PARK, Na Ri**
**Daejeon 34122 (KR)**
• **LEE, Jun Won**
**Daejeon 34122 (KR)**
• **KWAK, No Woo**
**Daejeon 34122 (KR)**
• **KIM, Ji Hye**
**Daejeon 34122 (KR)**
• **JUNG, Byoung Hun**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR PREPARING CATHODE ACTIVE MATERIAL AND CATHODE ACTIVE MATERIAL**

(57) The present invention relates to a method of preparing a positive electrode active material which includes steps of (A) preparing a pre-sintered product by performing primary sintering on a mixture in which a positive electrode active material precursor having a composition of Formula 1-1 or 1-2 described in the present specification and a lithium-containing raw material are mixed, (B) preparing a lithium transition metal oxide having a composition of Formula 2 described in the present specification by mixing the pre-sintered product and an aluminum-containing raw material, performing secondary sintering, washing, and drying, and (c) dry mixing the lithium transition metal oxide and a boron-containing raw material and performing a heat treatment to form a coating layer, a positive electrode active material prepared by the above preparation method, and a positive electrode for a lithium secondary battery and a lithium secondary battery which include the positive electrode active material.

[FIG. 1]

EP 4 243 117 A1

**Description**

**TECHNICAL FIELD**

Cross-reference to Related Applications

This application claims priority from Korean Patent Application No. 10-2021-0003193, filed on January 11, 2021, the disclosure of which is incorporated by reference herein.

Technical Field

The present invention relates to a method of preparing a positive electrode active material for a lithium secondary battery, a positive electrode active material prepared by the preparation method, and a positive electrode for a lithium secondary battery and a lithium secondary battery which include the positive electrode active material.

**BACKGROUND ART**

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt oxide, such as $LiCoO_2$, having a high operating voltage and excellent capacity characteristics has been mainly used. However, since the $LiCoO_2$ has very poor thermal properties due to an unstable crystal structure caused by delithiation and is expensive, there is a limitation in using a large amount of the $LiCoO_2$ as a power source for applications such as electric vehicles.

Lithium manganese composite metal oxides ($LiMnO_2$, $LiMn_2O_4$, etc.), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the $LiNiO_2$, $LiNi_{1-\alpha}Co_\alpha C_2$ ($\alpha$=0.1 to 0.3), in which a portion of nickel is substituted with cobalt, or a lithium nickel composite metal oxide, in which a portion of nickel is substituted with manganese (Mn), cobalt (Co), or aluminum (Al), has been developed.

However, with respect to the lithium nickel composite metal oxide, there is a limitation in that capacity is low. In order to increase the capacity of the lithium nickel composite metal oxide, a method of increasing an amount of nickel included in the lithium nickel composite metal oxide has been studied, but, in this case, a washing process was essential due to the presence of unreacted residual lithium on a surface thereof, and, since surface defects of the positive electrode active material occurred due to the washing process, life characteristics of the battery were degraded.

In order to overcome this issue, conventionally, a method of forming a coating layer on the surface of the positive electrode active material at a low temperature after washing of the positive electrode active material has been studied, but there are still limitations in terms of improving high-temperature life characteristics, resistance characteristics, and high-temperature gas generation characteristics.

Thus, there is a need to develop a positive electrode active material having improved high-temperature life characteristics, high-temperature resistance characteristics, and high-temperature gas generation characteristics as well as high capacity characteristics.

**DISCLOSURE OF THE INVENTION**

**TECHNICAL PROBLEM**

An aspect of the present invention provides a method of preparing a positive electrode active material having improved high-temperature life characteristics, high-temperature resistance characteristics, and high-temperature gas generation characteristics as well as high capacity characteristics and a positive electrode active material prepared thereby.

However, the object of the present invention is not limited to the aforesaid, but other objects not described herein will be clearly understood by those skilled in the art from descriptions below.

## TECHNICAL SOLUTION

According to an aspect of the present invention, there is provided a method of preparing a positive electrode active material which includes steps of: (A) preparing a pre-sintered product by performing primary sintering on a mixture in which a positive electrode active material precursor having a composition of Formula 1-1 or 1-2 and a lithium-containing raw material are mixed; (B) preparing a lithium transition metal oxide having a composition of Formula 2 by mixing the pre-sintered product and an aluminum-containing raw material, performing secondary sintering, washing, and drying; and (c) dry mixing the lithium transition metal oxide and a boron-containing raw material and performing a heat treatment to form a coating layer.

[Formula 1-1]     $Ni_{a1}Co_{b1}Mn_{c1}M^1_{d1}(OH)_2$

[Formula 1-2]     $Ni_{a1}Co_{b1}Mn_{c1}M^1_{d1}O \cdot OH$

In Formulae 1-1 and 1-2,

M¹ is at least one selected from zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and
$0.7 \leq a1 \leq 1.0$, $0 \leq b1 \leq 0.3$, $0 \leq c1 \leq 0.3$, and $0 \leq d1 \leq 0.1$, and

[Formula 2]     $Li_xNi_{a2}Co_{b2}Mn_{c2}Al_{d2}M^1_{e2}O_2$

In Formula 2,
M¹ is at least one selected from Zr, B, W, Mg, Ce, Hf, Ta, La, Ti, Sr, Ba, F, P, and S, and
$0.9 \leq x \leq 1.12$, $0.7 \leq a2 \leq 1.0$, $0 \leq b2 \leq 0.3$, $0 \leq c2 \leq 0.3$, $0 < d2 \leq 0.2$, and $0 \leq e2 \leq 0.1$.

According to another aspect of the present invention, there is provided a positive electrode active material including a lithium transition metal oxide represented by Formula 2; and a coating layer containing boron which is formed on a surface of the lithium transition metal oxide, wherein the coating layer includes a Li-Al-B-O solid solution, and, in a time-of-flight secondary ion mass spectrum, a ratio of an intensity of a peak detected at a mass of greater than 27.0 and equal to or less than 27.5 to an intensity of a peak of Al⁺ is in a range of 1:0.5 to 1:1.5.

[Formula 2]     $Li_xNi_{a2}CO_{b2}M_{nc2}Al_{d2}M^1_{e2}O_2$

In Formula 2,

M¹ is at least one selected from Zr, B, W, Mg, Ce, Hf, Ta, La, Ti, Sr, Ba, F, P, and S, and
$0.9 \leq x \leq 1.12$, $0.7 \leq a2 \leq 1.0$, $0 \leq b2 \leq 0.3$, $0 \leq c2 \leq 0.3$, $0 < d2 \leq 0.2$, and $0 \leq e2 \leq 0.1$.

According to another aspect of the present invention, there is provided a positive electrode for a lithium secondary battery which includes the positive electrode active material according to the present invention.

According to another aspect of the present invention, there is provided a lithium secondary battery including the positive electrode according to the present invention.

## ADVANTAGEOUS EFFECTS

According to the present invention, high-temperature life characteristics, high-temperature resistance characteristics, and high-temperature gas generation characteristics of a battery using a positive electrode active material to be prepared may be improved by controlling a doping degree of aluminum present on an outermost surface by adding the aluminum in a sintering (secondary sintering) step before washing after pre-sintering (primary sintering) during the preparation of the positive electrode active material.

## BRIEF DESCRIPTION OF THE DRAWINGS

FIG. 1 is cation spectrum analysis results of each of positive electrode active materials of Example 1 and Comparative Example 1;

FIG. 2 is anion spectrum analysis results of each of the positive electrode active materials of Example 1 and Comparative Example 1;

FIG. 3 is a graph illustrating data related to discharge capacity at a high temperature of secondary batteries prepared in Examples 1 and 2 and Comparative Examples 1 and 2;

FIG. 4 is a graph illustrating high-temperature life characteristics of the secondary batteries prepared in Examples 1 and 2 and Comparative Examples 1 and 2;

FIG. 5 is a graph illustrating high-temperature resistance characteristics of the secondary batteries prepared in Examples 1 and 2 and Comparative Examples 1 and 2; and

FIG. 6 is a graph illustrating high-temperature gas generation characteristics of the secondary batteries prepared in Examples 1 and 2 and Comparative Examples 1 and 2.

## BEST MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in the present specification are used to merely describe exemplary embodiments, but are not intended to limit the invention. The terms of a singular form may include plural forms unless referred to the contrary.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "%" denotes wt% unless explicitly stated otherwise.

The term "on" in the present specification means not only a case in which one component is formed directly on an upper surface of another component, but also includes a case in which intervening components may also be present.

## Method of Preparing Positive Electrode Active Material

Hereinafter, a method of preparing a positive electrode active material according to the present invention will be described in detail.

The method of preparing a positive electrode active material according to the present invention includes the steps of: (A) preparing a pre-sintered product by performing primary sintering on a mixture in which a positive electrode active material precursor having a composition of Formula 1-1 or 1-2 and a lithium-containing raw material are mixed; (B) preparing a lithium transition metal oxide having a composition of Formula 2 by mixing the pre-sintered product and an aluminum-containing raw material, performing secondary sintering, washing, and drying; and (c) dry mixing the lithium transition metal oxide and a boron-containing raw material and performing a heat treatment to form a coating layer.

$$[\text{Formula 1-1}] \qquad Ni_{a1}Co_{b1}Mn_{c1}M^1_{d1}(OH)_2$$

$$[\text{Formula 1-2}] \qquad Ni_{a1}Co_{b1}Mn_{c1}M^1_{d1}O \cdot OH$$

In Formulae 1-1 and 1-2,

$M^1$ is at least one selected from zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and

$0.7 \leq a1 \leq 1.0$, $0 \leq b1 \leq 0.3$, $0 \leq c1 \leq 0.3$, and $0 \leq d1 \leq 0.1$, and

$$[\text{Formula 2}] \qquad Li_xNi_{a2}Co_{b2}Mn_{c2}Al_{d2}M^1_{e2}O_2$$

In Formula 2,

$M^1$ is at least one selected from Zr, B, W, Mg, Ce, Hf, Ta, La, Ti, Sr, Ba, F, P, and S, and

$0.9 \leq x \leq 1.12$, $0.7 \leq a2 \leq 1.0$, $0 \leq b2 \leq 0.3$, $0 \leq c2 \leq 0.3$, $0 < d2 \leq 0.2$, and $0 \leq e2 \leq 0.1$.

The present inventors have found that high-temperature life characteristics, high-temperature resistance characteristics, and high-temperature gas generation characteristics of a battery using a positive electrode active material to be prepared may be improved by adjusting a doping degree of aluminum present on an outermost surface to a high level by adding the aluminum in a secondary sintering (sintering before washing) step rather than a primary sintering (pre-sintering) step during the preparation of the positive electrode active material.

Hereinafter, each step will be described in more detail.

**Step (A)**

Step (A) is a step of preparing a pre-sintered product by performing primary sintering on a mixture in which a positive electrode active material precursor having a composition of Formula 1-1 or 1-2 and a lithium-containing raw material are mixed.

$$[\text{Formula 1-1}] \qquad Ni_{a1}Co_{b1}Mn_{c1}M^1_{d1}(OH)_2$$

$$[\text{Formula 1-2}] \qquad Ni_{a1}Co_{b1}Mn_{c1}M^1_{d1}O\cdot OH$$

In Formulae 1-1 and 1-2,

$M^1$ is at least one selected from Zr, B, W, Mg, Ce, Hf, Ta, La, Ti, Sr, Ba, F, P, and S, and $0.7\leq a1\leq1.0$, $0\leq b1\leq0.3$, $0\leq c1\leq0.3$, and $0\leq d1\leq0.1$.

a1 represents an atomic fraction of nickel among metallic elements in the precursor, wherein a1 may satisfy $0.7\leq a1\leq1$, $0.7\leq a1\leq0.98$, or $0.7\leq a1\leq0.95$.

b1 represents an atomic fraction of cobalt among the metallic elements in the precursor, wherein b1 may satisfy $0<b1\leq0.3$ or $0.01\leq b1\leq0.3$.

c1 represents an atomic fraction of manganese among the metallic elements in the precursor, wherein c1 may satisfy $0<c1\leq0.3$ or $0.01\leq c1\leq0.3$.

d1 represents an atomic fraction of $M^1$ among the metallic elements in the precursor, wherein d1 may satisfy $0\leq d1\leq0.1$ or $0\leq d1\leq0.05$.

The lithium-containing raw material may include at least one selected from lithium hydroxide hydrate, lithium carbonate, and lithium hydroxide. The lithium-containing raw material may specifically be a lithium hydroxide hydrate, for example, $LiOH\cdot H_2O$. In this case, reactivity between the lithium-containing raw material and the precursor having a high atomic fraction of nickel among the metallic elements in the precursor may be improved.

The positive electrode active material precursor and the lithium-containing raw material may be mixed in a molar ratio of 1:1.0 to 1:1.10, particularly 1:1.03 to 1:1.09, and more particularly 1:1.05 to 1:1.09. In a case in which the lithium-containing raw material is mixed in a molar ratio of less than the above range, there is a concern that capacity of the positive electrode active material to be prepared is reduced, and, in a case in which the lithium-containing raw material is mixed in a molar ratio of greater than the above range, a large amount of unreacted lithium (Li) remains as a by-product, and capacity reduction and separation of positive electrode active material particles (causing a positive electrode active material coalescence phenomenon) may occur after sintering.

A primary sintering temperature may be in a range of 600°C to 775°C. The primary sintering temperature may specifically be in a range of 620°C to 760°C, for example, 620°C to 700°C. In a case in which the primary sintering temperature is within the above range, a crystal structure of the pre-sintered product may be controlled, and, as a result, diffusion of aluminum during the secondary sintering may be appropriately controlled.

The primary sintering may be performed in an oxygen atmosphere. In this case, a pre-sintered product having a structurally stable phase may be formed.

The primary sintering may be performed for 2 hours to 15 hours. The sintering may be specifically performed for 3 hours to 10 hours, for example, 3 hours to 8 hours. In a case in which the primary sintering time is within the above range, sintering may be performed well without deviation (uniformly) for each sintering position.

Residual unreacted lithium is present on a surface of the pre-sintered product, wherein an amount of the residual lithium may be minimized through steps (B) and (C) according to the present invention.

**Step (B)**

Step (B) is a step of preparing a lithium transition metal oxide having a composition of the following Formula 2 by mixing the pre-sintered product prepared in step (A) and an aluminum-containing raw material, performing secondary sintering, washing, and drying.

[Formula 2]     $Li_x Ni_{a2} CO_{b2} Mn_{c2} Al_{d2} M^1_{e2} O_2$

In Formula 2,

M$^1$ is at least one selected from Zr, B, W, Mg, Ce, Hf, Ta, La, Ti, Sr, Ba, F, P, and S, and

$0.9 \leq x \leq 1.12$, $0.7 \leq a2 \leq 1.0$, $0 \leq b2 \leq 0.3$, $0 \leq c2 \leq 0.3$, $0 < d2 \leq 0.2$, and $0 \leq e2 \leq 0.1$.

a2 represents an atomic fraction of nickel among metallic elements other than lithium in the positive electrode active material, wherein a2 may satisfy $0.7 \leq a2 \leq 1.0$, $0.7 \leq a2 \leq 0.98$, or $0.7 \leq a2 \leq 0.95$.

b2 represents an atomic fraction of cobalt among the metallic elements other than lithium in the positive electrode active material, wherein b2 may satisfy $0 < b2 \leq 0.3$ or $0.01 \leq b2 \leq 0.3$.

c2 represents an atomic fraction of manganese among the metallic elements other than lithium in the positive electrode active material, wherein c2 may satisfy $0 < c2 \leq 0.3$ or $0.01 \leq c2 \leq 0.3$.

d2 represents an atomic fraction of aluminum among the metallic elements other than lithium in the positive electrode active material, wherein d2 may satisfy $0 \leq d2 \leq 0.2$, $0 \leq d2 \leq 0.1$, or $0 \leq d2 \leq 0.05$.

e2 represents an atomic fraction of M$^1$ among the metallic elements other than lithium in the positive electrode active material, wherein e2 may satisfy $0 \leq e2 \leq 0.1$ or $0 \leq e2 \leq 0.05$.

In the present invention, since a coating layer, in which aluminum is present in a high concentration, is formed on the surface of the resultant positive electrode active material by mixing the aluminum-containing raw material and performing the secondary sintering in step (B), high-temperature life characteristics, high-temperature resistance characteristics, and high-temperature gas generation characteristics of a secondary battery including the positive electrode active material may be improved.

The aluminum-containing raw material may be at least one selected from $Al(OH)_3$, $Al_2O_3$, $AlF_3$, $AlBr_3$, $AlPO_4$, $AlCl_3$, $Al(NO)_3$, $Al(NO_3)_3 \cdot 9H_2O$, $Al_2(SO_4)_3 \cdot H_2O$, $Al(H_2PO_4)_3$, $C_2H_5O_4Al$, $Al(SO)_4$, $NaAlO_2$, $Al_2CoO_4$, $LaAlO_3$, and $MgAl_2O_4$. The aluminum-containing raw material may be specifically $Al(OH)_3$ and $Al_2O_3$, and may be more specifically $Al(OH)_3$. In this case, since a melting point of the aluminum-containing raw material is low, aluminum may be uniformly diffused to exist abundantly and uniformly on a surface of the lithium transition metal oxide.

The aluminum-containing raw material may be added in an amount of 1,000 ppm to 10,000 ppm, particularly 2,000 ppm to 8,000 ppm, and more particularly 4,000 ppm to 6,000 ppm based on the pre-sintered product. In a case in which the amount of the aluminum-containing raw material is within the above range, a decrease in capacity of a battery may not only be prevented when the positive electrode active material to be prepared is use in the battery, but thermal stability may also be improved.

A secondary sintering temperature may be in a range of 730°C to 900°C. The secondary sintering temperature may specifically be in a range of 730°C to 850°C, for example, 750°C to 800°C. In a case in which the secondary sintering temperature is within the above range, since an appropriate crystal size is formed, life characteristics of a battery may be improved when the positive electrode active material to be prepared is use in the battery.

The secondary sintering temperature is higher than the primary sintering temperature, and a difference between the secondary sintering temperature and the primary sintering temperature may be in a range of 10°C to 150°C, particularly 20°C to 150°C, and more particularly 30°C to 140°C. In a case in which the difference between the secondary sintering temperature and the primary sintering temperature is within the above range, it may be advantageous to control the doping degree of the aluminum present on the outermost surface.

The secondary sintering may be performed in an oxygen atmosphere. In this case, since cation exchange between lithium and nickel is suppressed, capacity of a battery may be improved when the positive electrode active material to be prepared is use in the battery.

The secondary sintering may be performed for 2 hours to 15 hours. The sintering may be specifically performed for 3 hours to 10 hours, for example, 3 hours to 8 hours. In a case in which the secondary sintering time is within the above range, sintering may be performed well without deviation (uniformly) for each sintering position.

The washing is a process for removing unreacted residual lithium, wherein it is a process of washing by mixing a secondary sintered product and a washing solution and then separating the secondary sintered product from the washing solution.

The washing solution may be water or ethanol, but is not limited thereto.

The washing solution may be mixed in an amount of 60 parts by weight to 200 parts by weight, particularly 60 parts by weight to 150 parts by weight, and more particularly 80 parts by weight to 120 parts by weight based on 100 parts by weight of the secondary sintered product. In a case in which the amount of the washing solution is within the above range, residual lithium present on a surface of the secondary sintered product may be easily removed. In a case in which the amount of the washing solution is lower than the above range, since an amount of the residual lithium present on the surface of the secondary sintered product is large, there is a concern that gas is generated when the secondary sintered product is used in the battery, and, in contrast, in a case in which the amount of the washing solution is higher than the above range, since the surface of the lithium transition metal oxide is damaged, lifetime may be reduced and a resistance increase rate may be increased when the lithium transition metal oxide is used in the battery.

The process of separating the secondary sintered product from the washing solution may be performed such that a water content of the secondary sintered product separated from the washing solution is in a range of 3% to 15%. Specifically, the process of separating the secondary sintered product from the washing solution may be performed such that the water content of the secondary sintered product is in a range of 5% to 12%, for example, 5% to 10%.

In this case, the water content denotes a moisture content included in the secondary sintered product before drying after the separation from the washing solution, wherein it may be calculated according to Equation 1 below.

[Equation 1]

$$\text{Water content (\%)} = \{[(\text{mass of the secondary sintered product before drying}) - (\text{mass of the secondary sintered product after drying})]/(\text{mass of the secondary sintered product before drying})\} \times 100$$

In this case, the drying may be performed by drying the secondary sintered product separated from the washing solution at 130°C for 300 minutes.

In a case in which the water content is within the above range, since a surface state, i.e., surface properties, may be controlled, a coating layer having a uniform composition and a uniform thickness may be easily formed on the surface of the lithium transition metal oxide.

The separation may be performed using a pressure-reducing filter having an average pore size of 1 um to 50 um. In this case, the secondary sintered product may be separated from the washing solution in a short time.

The drying is to remove moisture from the lithium transition metal oxide containing the moisture through the washing process, wherein, after the moisture is removed by using a vacuum pump, drying may be performed in a temperature range of 60°C to 150°C. Specifically, the drying may be performed in a temperature range of 60°C to 150°C for 3 hours or more.

**Step (C)**

Step (C) is a step of dry mixing the lithium transition metal oxide prepared in step (B) and a boron-containing raw material and performing a heat treatment to form a coating layer.

A coating layer containing boron is formed on the surface of the lithium transition metal oxide through step (C) . Specifically, a coating layer including a Li-Al-B-O solid solution is formed on the surface of the lithium transition metal oxide. That is, in a case in which the lithium transition metal oxide and the boron-containing raw material are dry mixed and heat-treated, a coating layer including a Li-Al-B-O solid solution as well as a Li-B-0 solid solution is formed. In this case, since the coating layer is strengthened, a side reaction between the positive electrode active material and an electrolyte solution may be more effectively suppressed. Additionally, an aluminum-rich Ni-Co-Mn-Al solid solution and an aluminum-rich Ni-Co-Mn-Al-B solid solution may be further included in the coating layer. A thickness of the coating layer may be in a range of 4 nm to 10 nm. In a case in which the thickness of the coating layer is within the above range, since a surface side reaction may be suppressed, life characteristics of a battery may be improved when the positive electrode active material is used in the battery, and gas generation may be suppressed.

In addition, since aluminum is abundantly present on the outermost surface of the lithium transition metal oxide, aluminum is also abundantly present in the coating layer and, when the resultant positive electrode active material is analyzed, a ratio of an intensity of a peak detected at a mass of greater than 27.0 and equal to or less than 27.5 to an intensity of a peak of $Al^+$ in a time-of-flight secondary ion mass spectrum may be in a range of 1:0.5 to 1:1.5.

The boron-containing raw material may be at least one selected from $H_3BO_3$, $B_2H_4O_4$, $B_2O_3$, $LiBO_2$, $Li_2B_4O_7$, and $AlBO_3$. The boron-containing raw material may be specifically $H_3BO_3$ and $B_2O_3$, and may be more specifically $H_3BO_3$. In this case, since a melting point of the boron-containing raw material is low, a uniform coating layer may be formed.

The boron-containing raw material may be mixed in an amount of 0.1 part by weight to 1.5 parts by weight, particularly 0.2 part by weight to 1.0 part by weight, and more particularly 0.4 part by weight to 0.8 part by weight based on 100 parts by weight of the lithium transition metal oxide. In a case in which the amount of the boron-containing raw material is within the above range, since the coating layer is not only uniformly formed, but also the coating layer with an appropriate thickness is formed, life characteristics of a battery may be improved when the positive electrode active material to be prepared is use in the battery.

In a case in which the lithium transition metal oxide and the boron-containing raw material are dry mixed, there is an advantage in that impurities may be minimized in comparison to a case of wet mixing.

A heat treatment temperature may be in a range of 250°C to 400°C. The heat treatment temperature may specifically be in a range of 250°C to 350°C, for example, 260°C to 330°C. In a case in which the heat treatment temperature is within the above range, since a coating layer is uniformly formed on the lithium transition metal oxide, life characteristics of a battery may be improved when the positive electrode active material is use in the battery. In a case in which the heat treatment temperature is lower than a lower limit of the above range, since reactivity of the boron-containing raw material is low, the boron-containing raw material remains on the surface of the lithium transition metal oxide to be able to act as a resistance, and, in a case in which the heat treatment temperature is higher than an upper limit of the above range, since the boron-containing raw material and lithium present on the surface of the lithium transition metal oxide may be overreacted, a large amount of lithium may be present in the coating layer.

**Positive Electrode Active Material**

Also, a positive electrode active material according to the present invention includes a lithium transition metal oxide represented by the following Formula 2; and a coating layer containing boron which is formed on a surface of the lithium transition metal oxide, wherein the coating layer includes a Li-Al-B-O solid solution, and, in a time-of-flight secondary ion mass spectrum of the positive electrode active material, a ratio of an intensity of a peak detected at a mass of greater than 27.0 and equal to or less than 27.5 to an intensity of a peak of $Al^+$ is in a range of 1:0.5 to 1:1.5.

$$[\text{Formula 2}] \qquad Li_xNi_{a2}CO_{b2}Mn_{c2}Al_{d2}M^1_{e2}O_2$$

In Formula 2,

M$^1$ is at least one selected from Zr, B, W, Mg, Ce, Hf, Ta, La, Ti, Sr, Ba, F, P, and S, and
$0.9 \leq x \leq 1.12$, $0.7 \leq a2 \leq 1.0$, $0 \leq b2 \leq 0.3$, $0 \leq c2 \leq 0.3$, $0 < d2 \leq 0.2$, and $0 \leq e2 \leq 0.1$.
a2 represents an atomic fraction of nickel among metallic elements other than lithium in the positive electrode active material, wherein a2 may satisfy $0.7 \leq a2 < 1.0$, $0.7 \leq a2 \leq 0.98$, or $0.7 \leq a2 \leq 0.95$.
b2 represents an atomic fraction of cobalt among the metallic elements other than lithium in the positive electrode active material, wherein b2 may satisfy $0 < b2 \leq 0.3$ or $0.01 \leq b2 \leq 0.3$.
c2 represents an atomic fraction of manganese among the metallic elements other than lithium in the positive electrode active material, wherein c2 may satisfy $0 < c2 \leq 0.3$ or $0.01 \leq c2 \leq 0.3$.
d2 represents an atomic fraction of aluminum among the metallic elements other than lithium in the positive electrode active material, wherein d2 may satisfy $0 \leq d2 \leq 0.2$, $0 \leq d2 \leq 0.1$, or $0 \leq d2 \leq 0.05$.
e2 represents an atomic fraction of M$^1$ among the metallic elements other than lithium in the positive electrode active material, wherein e2 may satisfy $0 \leq e2 \leq 0.1$ or $0 \leq e2 \leq 0.05$.

Since the positive electrode active material is prepared by the above-described preparation method, it has a coating layer that is reinforced due to the presence of a large amount of aluminum on the surface thereof, and thus, high-temperature life characteristics, high-temperature resistance characteristics, and high-temperature gas generation characteristics of a secondary battery including the positive electrode active material may be improved. The coating layer may further include an aluminum-rich Ni-Co-Mn-Al solid solution and an aluminum-rich Ni-Co-Mn-Al-B solid solution. A thickness of the coating layer may be in a range of 4 nm to 10 nm. In a case in which the thickness of the coating layer is within the above range, since the side reaction with the electrolyte solution may be suppressed, high-temperature life characteristics and high-temperature resistance characteristics of a battery may be improved when the positive electrode active material is used in the battery and gas generation may be suppressed.

In the time-of-flight secondary ion mass spectrum of the positive electrode active material, the ratio of the intensity of the peak detected at a mass of greater than 27.0 and equal to or less than 27.5 to the intensity of the peak of $Al^+$ is in a range of 1:0.5 to 1:1.5, particularly 1:0.6 to 1:1.3, and more particularly 1:0.7 to 1:1.2. The peak detected at a mass of greater than 27.0 and equal to or less than 27.5 is a peak of $C_2H_3^+$, wherein it is a base peak. In this case, cycle characteristics as well as capacity characteristics of the battery, in which the positive electrode active material according to the present invention is used, may be improved. Particularly, the high-temperature life characteristics of the battery may be improved, and resistance increase rate and gas generation rate at high temperatures may be suppressed.

In the time-of-flight secondary ion mass spectrum of the positive electrode active material, a ratio of an intensity of a peak detected at a mass of 182 to 184 to an intensity of a peak detected at a mass of 172 to 174 may be in a range of 1:0.3 to 1:2, particularly 1:0.4 to 1:1.5, and more particularly 1:0.5 to 1:1.2. In this case, since a side reaction, which may occur on the surface of the positive electrode active material, is suppressed, gas generation during charge and discharge of a secondary battery including the positive electrode active material may be suppressed and a resistance increase rate of the secondary battery may be improved.

In the time-of-flight secondary ion mass spectrum of the positive electrode active material, a ratio of the intensity of the peak detected at a mass of 182 to 184 to an intensity of a peak detected at a mass of 197 to 199 may be in a range of 1:0.3 to 1:1.5, particularly 1:0.3 to 1:1.2, and more particularly 1:0.3 to 1:0.8. In this case, since the side reaction, which may occur on the surface of the positive electrode active material, is suppressed, the gas generation during charge and discharge of the secondary battery including the positive electrode active material may be suppressed and the resistance increase rate of the secondary battery may be improved.

## Positive Electrode

Also, the present invention provides a positive electrode for a lithium secondary battery which includes the above positive electrode active material. Specifically, the positive electrode for a secondary battery includes a positive electrode collector and a positive electrode active material layer formed on the positive electrode collector, wherein the positive electrode active material layer includes a positive electrode active material according to the present invention.

In this case, since the positive electrode active material is the same as described above, detailed descriptions thereof will be omitted, and the remaining configurations will be only described in detail below.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and may optionally include a binder, if necessary, in addition to the positive electrode active material.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 0.1 wt% to 15 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

**Lithium Secondary Battery**

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte. Since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

## MODE FOR CARRYING OUT THE INVENTION

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Examples

### Example 1

$Ni_{0.88}Co_{0.05}Mn_{0.07}(OH)_2$, as a positive electrode active material precursor, and $LiOH \cdot H_2O$ were mixed so that a molar ratio of Li:transition metals (Ni+Co+Mn) was 1.07:1, and primary sintering was performed at 640°C for 5 hours to prepare a pre-sintered product (including $Ni_{0.88}Co_{0.05}Mn_{0.07}O_2$).

The pre-sintered product and $Al(OH)_3$ were mixed so that a molar ratio of Ni:Co:Mn:Al was 0.86:0.05:0.07:0.02, and secondary sintering was performed at 775°C for 6 hours to prepare a sintered product (including $LiNi_{0.86}Co_{0.05}Mn_{0.07}Al_{0.02}O_2$). The sintered product and water were mixed in a weight ratio of 1:1.2 and washed for 5 minutes, and the washed product was reduced pressure filtered so that a water content was in a range of 5% to 10% and then dried at 130°C to prepare a lithium transition metal oxide having a composition of $LiNi_{0.86}Co_{0.05}Mn_{0.07}Al_{0.02}O_2$.

Subsequently, the lithium transition metal oxide and $H_3BO_3$ were mixed in a weight ratio of 100:0.57 and heat-treated at 300°C for 4 hours to prepare a positive electrode active material having a coating layer including a Li-Al-B-O solid solution, a Li-B-O solid solution, and a B-0 solid solution formed on a surface thereof.

### Example 2

A positive electrode active material was prepared in the same manner as in Example 1 except that the primary sintering temperature in Example 1 was adjusted to 720°C.

### Comparative Example 1

$Ni_{0.88}Co_{0.05}Mn_{0.07}(OH)_2$, as a positive electrode active material precursor, $LiOH \cdot H_2O$, and $Al(OH)_3$ were mixed so that a molar ratio of Li:Ni:Co:Mn:Al was 1.05:0.86:0.05:0.07:0.02, and, after primary sintering was performed at 640°C for 5 hours, secondary sintering was performed at 775°C for 6 hours to prepare a sintered product (including $LiNi_{0.86}Co_{0.05}Mn_{0.07}Al_{0.02}O_2$).

The sintered product and water were mixed in a weight ratio of 1:1.2 and washed for 5 minutes, and the washed product was reduced pressure filtered so that a water content in the washed product was in a range of 5% to 10% and then dried at 130°C to prepare a lithium transition metal oxide having a composition of $LiNi_{0.86}Co_{0.05}Mn_{0.07}Al_{0.02}O_2$.

Subsequently, the lithium transition metal oxide and $H_3BO_3$ were mixed in a weight ratio of 100:0.57 and heat-treated at 300°C for 4 hours to prepare a positive electrode active material having a coating layer including Li-B-O and B-0 solid solutions formed on a surface thereof.

### Comparative Example 2

A $LiNi_{0.88}Co_{0.05}Mn_{0.07}O_2$ lithium transition metal oxide, $H_3BO_3$, and $Al(OH)_3$ were mixed in a weight ratio of 100:0.2:0.3 and heat-treated at 700°C for 4 hours to prepare a positive electrode active material having a coating layer including a Li-Al-B-O solid solution formed on a surface thereof.

**Experimental Example 1: Confirmation of Coating Layer Formation**

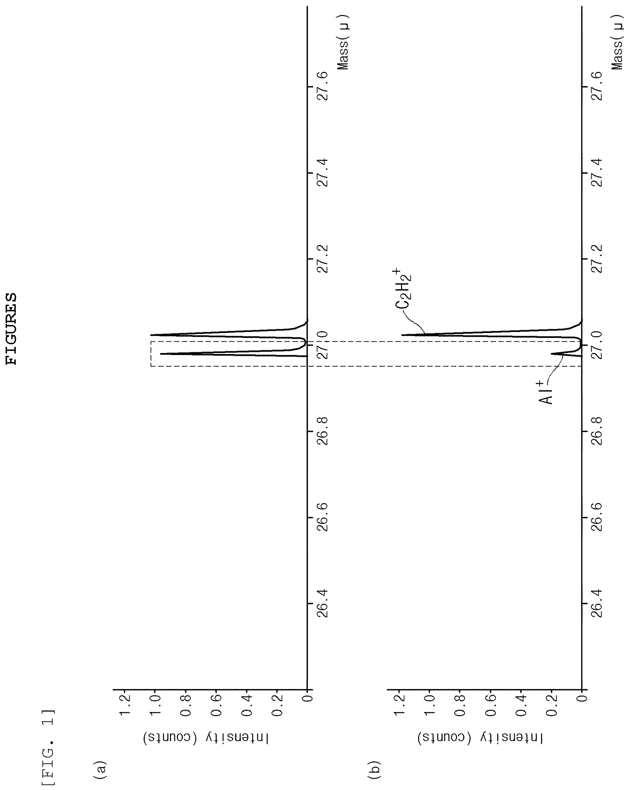

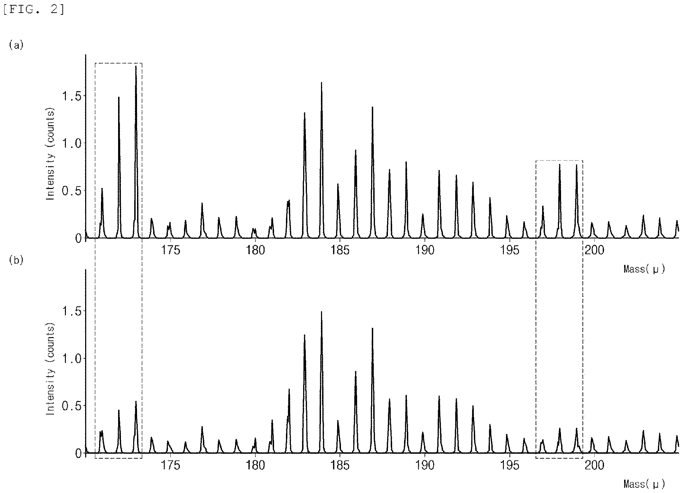

Cation spectrum and anion spectrum of the surfaces of the positive electrode active materials prepared in Example 1 and Comparative Example 1 were measured using a time-of-flight secondary ion mass spectrometer (TOF-SIMS5, ION-TOF GmbH), and the results thereof are illustrated in FIG. 1 and FIG. 2.

First, (a) and (b) of FIG. 1 are the cation spectral analysis results of Example 1 and Comparative Example 1, respectively.

As a result of cation analysis of outermost surfaces of the positive electrode active materials prepared in Example 1 and Comparative Example 1, with respect to Example 1, a peak of $Al^+$ was strongly observed in a mass range of 26.9 to 27.0, but, with respect to Comparative Example 1, it may be confirmed that a peak of $Al^+$ was weakly observed in the above range. The reason for this is that, with respect to Example 1, the preparation method was adjusted so that a large amount of aluminum was present on the surface of the positive electrode active material before the formation of the coating layer on the surface of the positive electrode active material.

Specifically, it may be confirmed that, in the cation spectrum of Example 1, a ratio of an intensity of a peak ($C_2H_3^+$ peak) detected at a mass of greater than 27.0 and equal to or less than 27.1 to an intensity of a peak of $Al^+$ was 1:0.9. In contrast, it may be confirmed that, in the cation spectrum of Comparative Example 1, a ratio of an intensity of a peak ($C_2H_3^+$ peak) detected at a mass of greater than 27.0 and equal to or less than 27.1 to an intensity of a peak of $Al^+$ was 1:0.2.

Also, (a) and (b) of FIG. 2 are the anion spectral analysis results of Example 1 and Comparative Example 1, respectively.

As a result of anion analysis of the outermost surfaces of the positive electrode active materials prepared in Example 1 and Comparative Example 1, with respect to Example 1, peaks related to aluminum were strongly observed in a mass range of 172 to 174, and peaks related to aluminum were strongly observed in a mass range of 197 to 198, but, with respect to Comparative Example 1, it may be confirmed that peaks were weakly observed in the above ranges.

Specifically, in the anion spectrum of Example 1, it may be confirmed that a ratio of an intensity of a peak detected at a mass of 182 to 184 to an intensity of a peak detected at a mass of 172 to 174 was 1:1.1, and it may be confirmed that a ratio of the intensity of the peak detected at a mass of 182 to 184 to an intensity of a peak detected at a mass of 197 to 199 was 1:0.5. In contrast, in the anion spectrum of Comparative Example 1, it may be confirmed that a ratio of an intensity of a peak detected at a mass of 182 to 184 to an intensity of a peak detected at a mass of 172 to 174 was 1:0.4, and it may be confirmed that a ratio of the intensity of the peak detected at a mass of 182 to 184 to an intensity of a peak detected at a mass of 197 to 199 was 1:0.2.

**Experimental Example 2: Evaluation of Capacity and Resistance Characteristics of Lithium Secondary Battery**

Lithium secondary batteries were prepared by using the positive electrode active materials prepared in Examples 1 and 2 and Comparative Examples 1 and 2, respectively, and their capacity and resistance characteristics were checked. In this case, each lithium secondary battery was prepared by using the following method except that each of the positive electrode active materials prepared in Examples 1 and 2 and Comparative Examples 1 and 2 was used.

Specifically, each of the positive electrode active materials prepared in Examples 1 and 2 and Comparative Examples 1 and 2, a carbon black conductive agent, and a polyvinylidene fluoride binder were mixed at a weight ratio of 97.5:1.15:1.35 in an NMP solvent to prepare a composition for forming a positive electrode. A 12 um thick Al current collector was coated with the composition for forming a positive electrode, dried, and then roll-pressed to prepare a positive electrode. Each of the lithium secondary batteries according to Examples 1 and 2 and Comparative Examples 1 and 2 was prepared by stacking the above-prepared positive electrode and lithium metal, as a negative electrode, with a porous polyethylene separator, putting the stack in a battery case, and injecting an electrolyte solution in which 1 M $LiPF_6$ and other additives were dissolved in a mixed solvent in which ethylene carbonate(EC):dimethyl carbonate(DMC):ethyl methyl carbonate(EMC) were mixed in a ratio of 3:4:3.

Each of the lithium secondary batteries thus prepared was charged at a constant current of 0.1 C to 4.25 V in a constant current/constant voltage (CC/CV) mode at 25°C (CV 0.05 C), and then discharged to 3 V in a CC mode to measure initial charge capacity (unit: mAh/g) at room temperature (25°C), and the results thereof are presented in Table 1 below.

[Table 1]

|  | Initial charge capacity at 25°C (mAh/g) |
| --- | --- |
| Example 1 | 213.1 |
| Example 2 | 213.5 |

(continued)

| | Initial charge capacity at 25°C (mAh/g) |
|---|---|
| Comparative Example 1 | 213.0 |
| Comparative Example 2 | 202.8 |

Referring to Table 1, with respect to the batteries including the positive electrode active materials prepared in Examples 1 and 2, it may be confirmed that initial charge capacities at room temperature were excellent. For reference, in a case in which the boron-containing raw material and the aluminum-containing raw material were mixed with the lithium transition metal oxide and then heat-treated at 700°C to form a coating layer as in Comparative Example 2, a degree of diffusion of aluminum and boron was not controlled, and it may be understood that there was a problem in that capacity was reduced due to occurrence of a reaction, for example, doping of some boron or aluminum into the positive electrode active material at a high temperature.

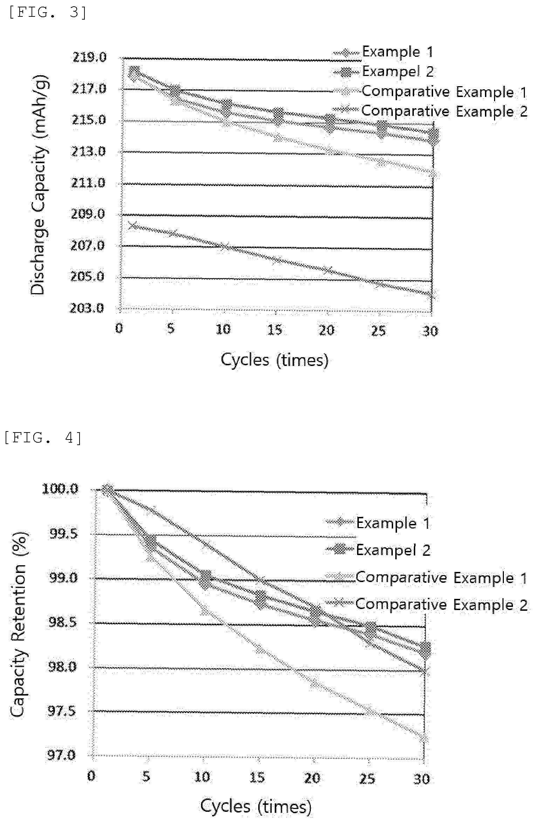

Each of the lithium secondary batteries thus prepared was charged at a constant current of 0.33 C to 4.25 V in a CC/CV mode at 45°C (CV 0.05 C), and then discharged to 3 V in a CC mode. The above charging and discharging behaviors were set as one cycle, and, after this cycle was repeated 30 times, initial discharge capacity (unit: mAh/g), capacity retention (unit: %), and resistance increase rate (unit: %) at a high temperature (45°C) of each of the lithium secondary batteries thus prepared were measured, and the results thereof are presented in Table 2 and FIGS. 3 to 5 below.

FIG. 3 is a graph illustrating data related to discharge capacity at a high temperature of the secondary batteries prepared in Examples 1 and 2 and Comparative Examples 1 and 2.

FIG. 4 is a graph illustrating high-temperature life characteristics of the secondary batteries prepared in Examples 1 and 2 and Comparative Examples 1 and 2. Specifically, FIG. 4 is a view illustrating data related to capacity retention at a high temperature.

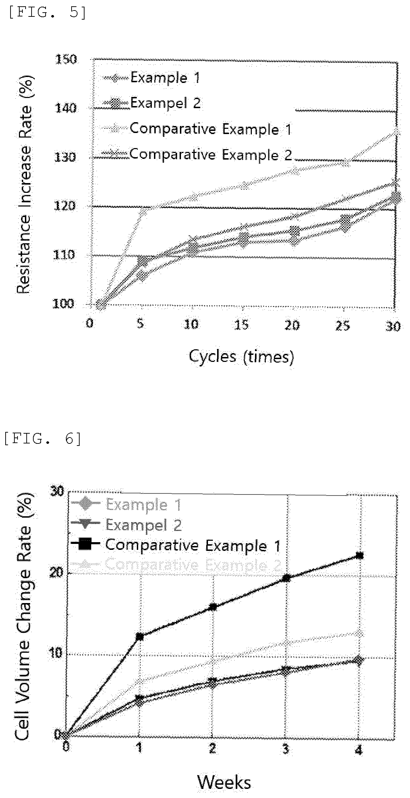

FIG. 5 is a graph illustrating high-temperature resistance characteristics of the secondary batteries prepared in Examples 1 and 2 and Comparative Examples 1 and 2. Specifically, FIG. 5 is a view illustrating data related to resistance increase rate at a high temperature.

[Table 2]

| | Initial charge capacity at 45°C (mAh/g) | Capacity retention at 45°C (%) | Resistance increase rate at 45°C (%) |
|---|---|---|---|
| Example 1 | 217.9 | 98.2 | 122.1 |
| Example 2 | 218.2 | 98.3 | 122.9 |
| Comparative Example 1 | 217.9 | 97.3 | 136.1 |
| Comparative Example 2 | 208.3 | 98.1 | 125.6 |

As illustrated in Table 2 and FIGS. 3 to 5, with respect to the secondary batteries prepared in Examples 1 and 2, it may be confirmed that high-temperature capacity characteristics, life characteristics, and resistance characteristics were all significantly better than those of the secondary batteries prepared in Comparative Examples 1 and 2.

**Experimental Example 3: Evaluation of Gas Generation Amount**

Lithium secondary batteries were prepared by using the positive electrode active materials prepared in Examples 1 and 2 and Comparative Examples 1 and 2, respectively, and their capacity and resistance characteristics were checked. In this case, each lithium secondary battery was prepared by using the following method except that each of the positive electrode active materials prepared in Examples 1 and 2 and Comparative Examples 1 and 2 was used.

Specifically, each of the positive electrode active materials prepared in Examples 1 and 2 and Comparative Examples 1 and 2, a carbon black conductive agent, and a polyvinylidene fluoride binder were mixed at a weight ratio of 97.5:1.15:1.35 in an NMP solvent to prepare a composition for forming a positive electrode. A 12 um thick Al current collector was coated with the composition for forming a positive electrode, dried, and then roll-pressed to prepare a positive electrode.

Next, a negative electrode active material (natural graphite), a conductive agent (carbon black), and a binder (SBR+CMC) were mixed in water at a weight ratio of 95:1.5:3.5 to prepare a negative electrode slurry. A copper current collector was coated with the negative electrode slurry, dried, and then rolled to prepare a negative electrode.

Three mono-cells having an electrode size of 3 cm × 4 cm each were prepared by preparing an electrode assembly by disposing a separator between the positive electrode and the negative electrode, disposing the electrode assembly in a battery case, and then injecting an electrolyte solution. In this case, as the electrolyte solution, an electrolyte solution, in which 1 M $LiPF_6$ was dissolved in an organic solvent in which ethylene carbonate:ethyl methyl carbonate:diethyl carbonate were mixed in a volume ratio of 3:3:4, was used.

After the three mono-cells were charged at a constant current of 0.33 C to 4.25 V in a CC/CV mode at 45°C (CV 0.05 C), the positive electrodes were separated. The separated positive electrodes were put in a cell pouch, and, after an electrolyte solution was additionally injected, the cell pouch was sealed to prepare a sample. A cell volume change rate (unit: %) was measured while the sample was stored at 60°C for 4 weeks, and the results thereof are presented in Table 3 and FIG. 6 below.

[Table 3]

| | Cell volume change rate (%) | | | |
|---|---|---|---|---|
| | 1 week | 2 weeks | 3 weeks | 4 weeks |
| Example 1 | 4.15 | 6.47 | 8.08 | 9.82 |
| Example 2 | 4.70 | 6.92 | 8.54 | 9.59 |
| Comparative Example 1 | 12.32 | 16.02 | 19.67 | 22.60 |
| Comparative Example 2 | 6.80 | 9.33 | 11.73 | 13.07 |

Referring to Table 3, with respect to the batteries including the positive electrode active materials of Examples 1 and 2, since cell volume change rates during storage at a high temperature were significantly smaller than those of the batteries including the positive electrode active materials of Comparative Examples 1 and 2, it may be confirmed that gas generation amounts were significantly less.

As a result, according to the present invention, it may be understood that cycle characteristics, particularly, high-temperature life characteristics, as well as capacity characteristics of the battery using the prepared positive electrode active material may be improved by controlling the doping degree of aluminum present on the outermost surface by adding the aluminum in the sintering (secondary sintering) step before washing after pre-sintering (primary sintering) during the preparation of the positive electrode active material. In addition, it may be understood that an increase in resistance at a high temperature and gas generation at a high temperature of the battery using the positive electrode active material may be suppressed.

**Claims**

1. A method of preparing a positive electrode active material, the method comprising steps of:

(A) preparing a pre-sintered product by performing primary sintering on a mixture in which a positive electrode active material precursor having a composition of Formula 1-1 or 1-2 and a lithium-containing raw material are mixed;

(B) preparing a lithium transition metal oxide having a composition of Formula 2 by mixing the pre-sintered product and an aluminum-containing raw material, performing secondary sintering, washing, and drying; and

(c) dry mixing the lithium transition metal oxide and a boron-containing raw material and performing a heat treatment to form a coating layer:

[Formula 1-1] $Ni_{a1}Co_{b1}Mn_{c1}M^1_{d1}(OH)_2$

[Formula 1-2] $Ni_{a1}Co_{b1}Mn_{c1}M^1_{d1}O \cdot OH$

wherein, in Formulae 1-1 and 1-2,

$M^1$ is at least one selected from zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and

0.7≤a1≤1.0, 0≤b1≤0.3, 0≤c1≤0.3, and 0≤d1≤0.1, and

[Formula 2]        $Li_xNi_{a2}Co_{b2}Mn_{c2}Al_{d2}M^1_{e2}O_2$

wherein, in Formula 2,
$M^1$ is at least one selected from Zr, B, W, Mg, Ce, Hf, Ta, La, Ti, Sr, Ba, F, P, and S, and
0.9≤x≤1.12, 0.7≤a2≤1.0, 0≤b2≤0.3, 0≤c2≤0.3, 0<d2≤0.2, and 0≤e2≤0.1.

2. The method of claim 1, wherein a primary sintering temperature is in a range of 600°C to 775°C.

3. The method of claim 1, wherein a secondary sintering temperature is in a range of 730°C to 900°C.

4. The method of claim 1, wherein the aluminum-containing raw material is at least one selected from $Al(OH)_3$, $Al_2O_3$, $AlF_3$, $AlBr_3$, $AlPO_4$, $AlCl_3$, $Al(NO)_3$, $Al(NO_3)_3 \cdot 9H_2O$, $Al_2(SO_4)_3 \cdot H_2O$, $Al(H_2PO_4)_3$, $C_2H_5O_4Al$, $Al(SO)_4$, $NaAlO_2$, $Al_2CoO_4$, $LaAlO_3$, and $MgAl_2O_4$.

5. The method of claim 1, wherein a secondary sintering temperature is higher than a primary sintering temperature, and a difference between the secondary sintering temperature and the primary sintering temperature is in a range of 10°C to 150°C.

6. The method of claim 1, wherein a heat treatment temperature is in a range of 250°C to 400°C.

7. The method of claim 1, wherein the boron-containing raw material is at least one selected from $H_3BO_3$, $B_2H_4O_4$, $B_2O_3$, $LiBO_2$, $Li_2B_4O_7$, and $AlBO_3$.

8. A positive electrode active material comprising a lithium transition metal oxide represented by Formula 2; and a coating layer containing boron which is formed on a surface of the lithium transition metal oxide,

   wherein the coating layer comprises a Li-Al-B-O solid solution, and
   in a time-of-flight secondary ion mass spectrum, a ratio of an intensity of a peak detected at a mass of greater than 27.0 and equal to or less than 27.5 to an intensity of a peak of $Al^+$ is in a range of 1:0.5 to 1:1.5:

   [Formula 2]        $Li_xNi_{a2}Co_{b2}M_{nc2}Al_{d2}M^1_{e2}O_2$

   wherein, in Formula 2,
   $M^1$ is at least one selected from zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S), and
   0.9≤x≤1.12, 0.7≤a2≤1.0, 0≤b2≤0.3, 0≤c2≤0.3, 0<d2≤0.2, and 0≤e2≤0.1.

9. The positive electrode active material of claim 8, wherein, in the time-of-flight secondary ion mass spectrum of the positive electrode active material, a ratio of an intensity of a peak detected at a mass of 182 to 184 to an intensity of a peak detected at a mass of 172 to 174 is in a range of 1:0.3 to 1:2.

10. The positive electrode active material of claim 8, wherein, in the time-of-flight secondary ion mass spectrum of the positive electrode active material, a ratio of an intensity of a peak detected at a mass of 182 to 184 to an intensity of a peak detected at a mass of 197 to 199 is in a range of 1:0.3 to 1:1.5.

11. A positive electrode for a lithium secondary battery, the positive electrode comprising the positive electrode active material of claim 8.

12. A lithium secondary battery comprising the positive electrode for a lithium secondary battery of claim 11.

[FIG. 1]

(a)

(b)

EP 4 243 117 A1

[FIG. 2]

(a)

(b)

[FIG. 3]

[FIG. 4]

[FIG. 5]

[FIG. 6]

## INTERNATIONAL SEARCH REPORT

| International application No. |
|---|
| **PCT/KR2022/000462** |

### A. CLASSIFICATION OF SUBJECT MATTER

**H01M 4/36**(2006.01)i; **H01M 4/525**(2010.01)i; **H01M 4/505**(2010.01)i; **H01M 4/62**(2006.01)i; **H01M 10/052**(2010.01)i; **C01G 53/00**(2006.01)i

According to International Patent Classification (IPC) or to both national classification and IPC

### B. FIELDS SEARCHED

Minimum documentation searched (classification system followed by classification symbols)

H01M 4/36(2006.01); C01G 53/00(2006.01); H01M 10/052(2010.01); H01M 4/485(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극활물질(positive electrode active material), 전구체(precursor), 리튬(lithium), 소성(calcination), 알루미늄(aluminium), 붕소(boron), 코팅층(coating layer), 리튬 이차전지(lithium secondary battery)

### C. DOCUMENTS CONSIDERED TO BE RELEVANT

| Category* | Citation of document, with indication, where appropriate, of the relevant passages | Relevant to claim No. |
|---|---|---|
| Y | KR 10-2019-0060705 A (LG CHEM, LTD.) 03 June 2019 (2019-06-03)<br>See claims 1-14; and paragraphs [0083] and [0085]-[0089]. | 1-12 |
| Y | KR 10-2020-0036424 A (POSCO et al.) 07 April 2020 (2020-04-07)<br>See claims 11 and 20; and paragraph [0112]. | 1-12 |
| Y | KR 10-2019-0007801 A (LG CHEM, LTD.) 23 January 2019 (2019-01-23)<br>See claims 1-14; and paragraphs [0068]-[0074]. | 1-12 |
| A | KR 10-2012-0138344 A (LG CHEM, LTD.) 26 December 2012 (2012-12-26)<br>See entire document. | 1-12 |
| A | KR 10-2020-0070647 A (LG CHEM, LTD.) 18 June 2020 (2020-06-18)<br>See entire document. | 1-12 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 April 2022** | **21 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2022/000462** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2019-102344 A (SUMITOMO METAL MINING CO., LTD.) 24 June 2019 (2019-06-24)<br>    See entire document. | 1-12 |

Form PCT/ISA/210 (second sheet) (July 2019)

**INTERNATIONAL SEARCH REPORT**
**Information on patent family members**

International application No.

**PCT/KR2022/000462**

| Patent document cited in search report | | | Publication date (day/month/year) | Patent family member(s) | | | Publication date (day/month/year) |
|---|---|---|---|---|---|---|---|
| KR | 10-2019-0060705 | A | 03 June 2019 | CN | 110650923 | A | 03 January 2020 |
| | | | | CN | 110650923 | B | 08 March 2022 |
| | | | | EP | 3611132 | A2 | 19 February 2020 |
| | | | | EP | 3611132 | A4 | 22 July 2020 |
| | | | | EP | 3611132 | B1 | 01 September 2021 |
| | | | | JP | 2021-501980 | A | 21 January 2021 |
| | | | | KR | 10-2177799 | B1 | 12 November 2020 |
| | | | | US | 2020-0350554 | A1 | 05 November 2020 |
| | | | | WO | 2019-103522 | A2 | 31 May 2019 |
| | | | | WO | 2019-103522 | A3 | 18 July 2019 |
| KR | 10-2020-0036424 | A | 07 April 2020 | None | | | |
| KR | 10-2019-0007801 | A | 23 January 2019 | CN | 110809563 | A | 18 February 2020 |
| | | | | JP | 2020-524384 | A | 13 August 2020 |
| | | | | JP | 6910697 | B2 | 28 July 2021 |
| | | | | KR | 10-2131738 | B1 | 08 July 2020 |
| | | | | US | 11258063 | B2 | 22 February 2022 |
| | | | | US | 2021-0036317 | A1 | 04 February 2021 |
| | | | | WO | 2019-013587 | A1 | 17 January 2019 |
| KR | 10-2012-0138344 | A | 26 December 2012 | KR | 10-1433667 | B1 | 25 August 2014 |
| KR | 10-2020-0070647 | A | 18 June 2020 | US | 2020-0185713 | A1 | 11 June 2020 |
| JP | 2019-102344 | A | 24 June 2019 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210003193